# EUROPÄISCHE PATENTANMELDUNG

(11) **EP 1 505 613 A2**
(43) Veröffentlichungstag der Anmeldung: **09.02.2005**
(21) Anmeldenummer: 04017442.7
(22) Anmeldetag: 23.07.2004
(51) Int. Cl.: H01H 9/16

(54) **Kaskadierbare Anordnung von Schaltersätzen**

(30) Priorität: 25.07.2003 DE 10333911
(71) Anmelder: Diehl AKO Stiftung & Co. KG, 88239 Wangen (DE)
(72) Erfinder: Albicker, Fritz, 88239 Wangen-Haslach (DE)
(74) Vertreter: Diehl Patentabteilung

(57) **Zusammenfassung**

Eine kaskadierbare Anordnung von Schaltersätzen (**11**) weist Aufruf- (**15.1**), Abfrage- (**14.1**) und Durchreiche-Anschlüsse (**16.1**) in einer definierten gegenseitigen Anordnung auf. Der Schaltbereich (**17**) eines jeden Schaltersatzes (**11**) kann einen digitalen, binär codierten oder analogen Schalter aufweisen. Eine Reduktion der Komplexität der Kaskadenschaltung wird über eine parallelbusartige Verdrahtung von mindestens einem eingangsseitigen Durchreiche-Anschluss (**16.1**) zu einem ausgangsseitigen Durchreiche-Anschluss (**16.3**) erreicht, der in einem nachfolgenden Schaltersatz (**11**) an der geometrischen Position dessen Aufruf-Anschlusses (**15.1**) liegt. Deshalb können dem ersten Schaltersatz (**11**) so viele Schaltersätze (**11**) nachgeschaltet (kaskadiert) werden, wie Durchreiche-Leitungen (**16.2**) auf den Schaltersätzen (**11**) vorhanden sind.

## Beschreibung

Die Erfindung betrifft eine kaskadierbare Anordnung von Schaltersätzen gemäß dem Oberbegriff des Anspruches 1.

Bei der Installation von Schaltersätzen, die die Möglichkeit der Kaskadierung im Sinne einer mechanischen Aufeinanderfolge bieten sollen, ist für jeden Schalter eines Schaltersatzes eine eigene Einzelverkabelung erforderlich. Damit ist ein extrem hoher Verschaltungs- und Kostenaufwand verbunden. Aufgrund des großen Bedarfs an individuellen Verbindungsleitungen ist auch mit einem dementsprechend großen Platzbedarf zu rechnen. Die Übersichtlichkeit der Gesamtschaltung ist dadurch eingeschränkt und nachträgliche Zusatzinstallationen und Erweiterungen sind nur schwer realisierbar.

Der vorliegenden Erfindung liegt die technische Problemstellung zugrunde, eine kaskadierbare Anordnung von Schaltersätzen derart zu gestalten, dass bei flexiblen Möglichkeiten hinsichtlich des Umfangs der Kaskadierung eine Reduzierung des Verschaltungsaufwandes erreicht wird.

Die Aufgabe ist erfindungsgemäß dadurch gelöst, dass gemäß den wesentlichen im Hauptanspruch angegebenen Merkmalen eine bestimmte geometrische Position von Aufruf- Abfrage- und Durchreiche-Anschlüssen am Schaltersatz eingehalten wird. Die geometrisch festgelegte Position des mindestens einen auf der Eingangsseite angeordneten Durchreiche-Anschlusses befindet sich auf der Ausgangsseite, die zugleich den Übergang auf die Eingangsseite des nächstfolgenden Schaltersatzes definiert, an der festgelegten geometrischen Position dessen Aufrufanschlusses.

Dabei ist unter einem Schaltersatz im Rahmen vorliegender Erfindung ein digitaler oder analoger Schaltbereich einschließlich seiner Löt- bzw. Steckverbindungen auf einer Schaltplatine oder einem sonstigen Trägerelement zu verstehen. Ein digitaler Schaltersatz weist wenigstens eine Schaltstrecke auf, d. h. einen mechanischen, elektromechanischen oder elektronischen Schalter, wodurch die Schaltstrecke entweder gesperrt oder frei geschaltet werden kann, d. h. AUS- oder EIN-Zustände erzeugt werden. Bei einer Mehrzahl von Schaltstrecken handelt es sich bevorzugt um eine binäre Gewichtung. Ein analoger Schaltbereich enthält ein stufenlos oder stufig einstellbares Potentiometer.

Im Falle mehrerer Schaltstrecken pro Schaltersatz sind die hinsichtlich ihrer Gewichtung oder anderer Kriterien definierten Schaltstrecken auf jeweils eine einem Kriterium zugeordnete Abfrage-Leitung geschaltet, die durch alle kaskadierten Schaltersätze durchgeschleift ist.

Über Durchreiche-Anschlüsse wird jedem Schaltersatz ein eigener Aufruf-Anschluss zugewiesen. Durch über eine Anzahl N von Durchreiche-Anschlüssen verfügende Schaltersätze mit gleicher geometrischer Konfiguration der Eingangs- und Ausgangsseite kann eine kaskadierbare Anordnung aufgebaut werden, die aus insgesamt maximal (N+1) Schaltersätzen bestehen kann. Wegen der identischen Anschluss-Geometrie können beliebige Schaltersätze in beliebiger Folge in Serie (kaskadiert) geschaltet werden. Dadurch wird der Verdrahtungsaufwand erheblich reduziert.

Aus den weiteren Ansprüchen und der nachstehenden Beschreibung eines in der Zeichnung unter Beschränkung auf das Funktionswesentliche nicht ganz maßstabsgerecht skizzierten prinzipiellen Realisierungsbeispiels für die erfindungsgemäße Lösung ergeben sich zusätzliche Weiterbildungen der Erfindung.

In der Zeichnung zeigt:
- **Fig. 1**: den prinzipiellen Aufbau eines Schaltersatzes mit der geometrischen Anordnung der Anschlüsse auf seiner Ein- und Ausgangsseite und
- **Fig. 2**: kaskadierte Schaltersätze nach **Fig. 1** unter Berücksichtigung unterschiedlicher Auslegung der Schaltbereiche in den einzelnen Schaltersätzen.

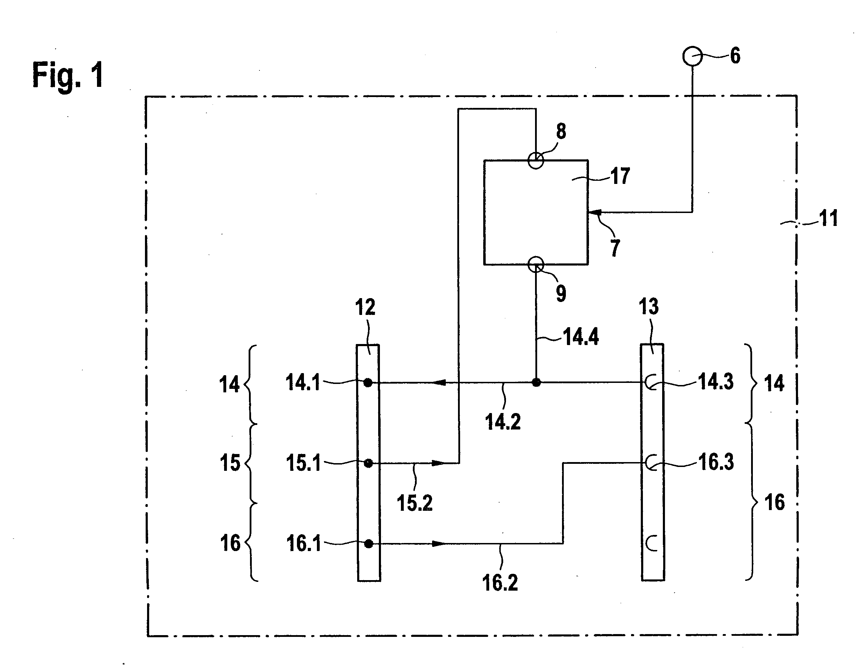

Der in **Fig. 1** gezeigte Schaltersatz **11** besitzt einen Schaltbereich **17** und auf seiner Eingangsseite **12** sowie auf seiner Ausgangsseite **13** drei verschiedene Anschlussbereiche **14, 15, 16,** nämlich zum Abfragen, Aufrufen und Durchreichen. Sie sind längs einer Linie nebeneinander angeordnet; wobei zwischen den einzelnen Anschlüssen weitere Funktionen realisiert sein können, wenn dadurch die nachfolgend beschriebene Kaskadierungsmöglichkeit nicht verhindert wird. Jeder dieser Bereiche kann über mehrere Anschlüsse bzw. Leitungen verfügen, wenn die Funktion des Schaltbereiches **17** dies bedingt. Der Durchreiche-Bereich **16** beschränkt über die Anzahl seiner Durchreiche-Leitungen **16.2** die Kaskadierungslänge.

Im Aufruf-Bereich **15** wird ein Aufruf-Anschluss **15.1** über eine Aufruf-Leitung **15.2** mit dem Eingang **8** des Schaltbereiches **17** des Schaltersatzes **11** verbunden.

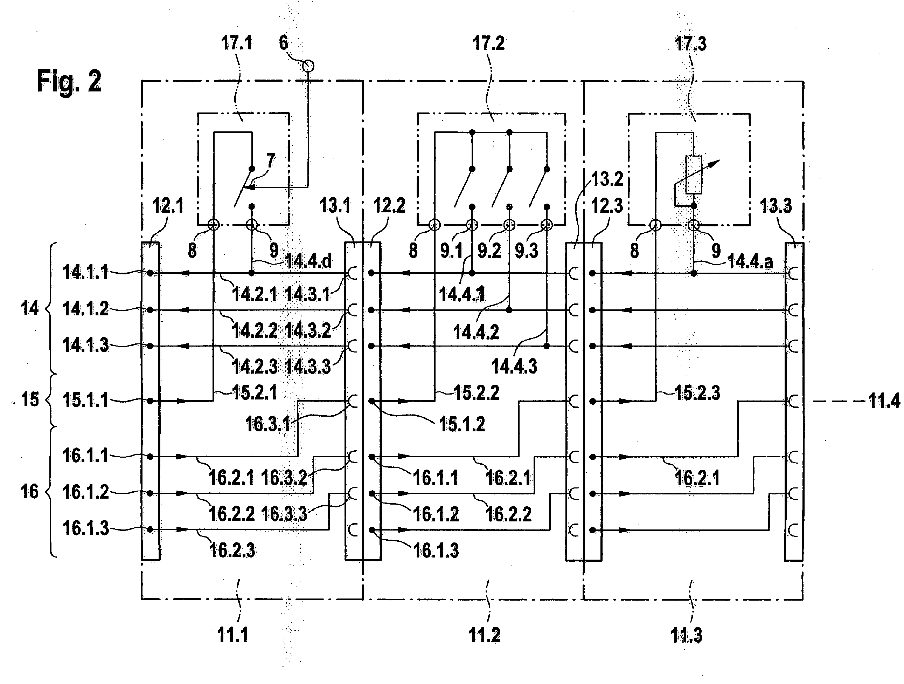

Die Betätigung des Schaltbereiches **17** erfolgt über eine funktionale Stellgröße **7**, d. h. eventuell Druck oder Temperatur eines Sensors **6**. Jeder Schaltbereich **17** symbolisiert eine Schaltstrecke mit einem elektronischen, mechanischen oder elektromechanischen Schalter mit den Schaltzuständen EIN und AUS oder den Einsatz binär codierter Schaltstrecken oder analoger Schalter, wie in der nachfolgenden **Fig. 2** näher erläutert.

Ein eingangsseitiger Abfrage-Anschluss **14.1** ist über seine Abfrage-Leitung **14.2** und die Ausgangs-Leitung **14.4** an den Ausgang **9** des Schaltbereiches **17** geführt, und außerdem an den ausgangsseitigen Abfrage-Anschluss **14.3.** Dadurch ist der momentane Schaltzustand des Schaltbereiches **17,** wenn er über den Aufruf-Anschluss **15.1** und die zugehörige Aufruf-Leitung **15.2** aufgerufen wird, am Abfrage-Anschluss **14.1** abfragbar. Dieser liegt geometrisch an der gleichen Position wie der ausgangsseitige Anschluss **14.3**.

Der eingangsseitige Durchreiche-Anschluss **16.1** ist über eine Durchreiche-Leitung **16.2** mit dem ausgangsseitigen Durchreiche-Anschluss **16.3** verbunden, der bei einer nachfolgenden Zuschaltung eines weiteren solchen Schaltersatzes **11** dort der Lage des eingangsseitigen Aufruf-Anschlusses **15.1** entspricht. Aus diesem Versatz, und weil allein die Aufruf-Leitung **15.2** nicht durchgeschleift ist, weist der Schaltersatz **11** ausgangsseitig nur den direkt durchlaufenden Abfrage-Bereich **14** und den versetzt durchlaufenden Durchreiche-Bereich **16** auf. Der Systematik wegen ist auf der Ausgangsseite **13** des Schaltersatzes **11** auch im Durchreiche-Bereich **16** eine Buchse eingezeichnet, die jedoch nicht belegt ist.

**Fig. 2** zeigt eine Kaskade von drei Schaltersätzen **11.1, 11.2** und **11.3**, die jeweils den prinzipiellen Aufbau gemäß dem in **Fig. 1** dargestellten Schaltersatz **11** besitzen. Die Verdrahtung der Schaltersätze **11** untereinander stellt eine parallele Busstruktur dar.

Die drei Schaltbereiche **17.1 - 17.3** der Schaltersätze **11** zeigen mögliche Formen der Ausgestaltung ihrer Schalter. Schaltbereich **17.1** besteht aus einem digitalen Schalter, weist also nur einen EIN- und AUS-Zustand auf. Der nächste Schaltersatz **11.2** besitzt einen Schaltbereich **17.2** mit drei Schaltstrecken, deren Schaltzustand eine binäre Codierung darstellen kann. Beim Schaltbereich **17.3** handelt es sich um einen analogen Schalter, hier ein stufenlos einstellbares Potentiometer.

Die Eingangsseite **12.1, 12.2, 12.3** eines jeden der Schaltersätze **11.1 - 11.3** verfügt im dargestellten Ausführungsbeispiel über einen Aufruf-Eingang, z. B.

Aufruf-Anschluss **15.1.1** für seinen Schaltbereich **17.1,** über drei Abfrage-Anschlüsse **14.1.1 - 14.1.3** für maximal drei Schaltstrecken, wie im Beispielsfalle des Schaltbereiches **17.2,** und über drei Durchreiche-Anschlüsse **16.1.1 - 16.1.3** für maximal drei auf den ersten Schaltersatz **11.1** kaskadierte Schaltersätze **11.2, 11.3** und optional **11.4**.

Aufgrund der Verwendung von N=3 eingangsseitigen Durchreiche-Anschlüssen **16.1.1 - 16.1.3** kann also die hier dargestellte kaskadierte Anordnung durch Hinzufügen eines weiteren Schaltersatzes **11.4** auf insgesamt vier Schaltersätze **11** erweitert werden.

Im Schaltersatz **11.1** verbindet die Aufruf-Leitung **15.2.1** den Aufruf-Anschluss **15.1.**1 mit dem Eingang **8** seines Schaltbereiches **17.1.** Entsprechendes gilt für Aufruf-Leitungen **15.2.2** und **15.2.3** in den weiteren Schaltersätzen **11.2** und **11.3.**

Die zu den jeweiligen eingangsseitigen Abfrage-Anschlüssen **14.1** gehörigen Abfrage-Leitungen **14.2** sind über alle Schaltersätze **11** durchgeschleift und enden am Ausgang **13** des letzten Schaltersatzes **11** der Kaskade an den entsprechenden Buchsen **14.3.1** usw.

Im Fall des Schaltersatzes **11.1** ist der Ausgang **9** des hier digitalen Schaltbereiches **17.1** über die Ausgangs-Leitung **14.4.d** mit der Abfrage-Leitung **14.2.1** und damit mit dem Abfrage-Anschluss **14.1.1** verdrahtet. Bei Schaltersatz **11.2** sind die binär gewichteten Ausgangs-Leitungen **14.4.1, 14.4.2** und **14.4.3** der drei Schaltstrecken des Schaltbereiches **17.2** mit den entsprechenden Abfrage-Leitungen **14.2.1, 14.2.2, 14.2.3** verbunden. Der Ausgang des Potentiometers im analogen Schaltersatz **11.3** ist mit der Abfrage-Leitung **14.2.1** über die Ausgangsleitung **14.4.a** verschaltet.

Der Schaltbereich **17.1** mit nur einer Schaltstrecke kann ausgangsseitig auf einen beliebigen der Abfrage-Anschlüsse **14.1.1 - 14.1.3** oder auf einen zusätzlichen, nur für einfache Schaltstrecken vorgesehenen Abfrage-Anschluss geführt sein. Im dargestellten Ausführungsbeispiel ist auch der analoge Schaltbereich **17.3** auf eine der Abfrage-Leitungen **14.2** geschaltet, die im Übrigen mit digitalen Schaltstrecken belegt sind. Das ist zulässig, weil steuerungsseitig bekannt ist, ob gerade über den Durchreiche-Anschluss **16.1.2** der Schaltersatz **11.3** angesteuert wird. Dann ist am Abfrage-Anschluss **14.1.1** von einer digitalen Auswertung auf eine analoge oder wenigstens quasi-analoge Pegelmessung umzuschalten. Um eine solche Umschaltung zu vermeiden, kann es zweckmäßig sein, abweichend von **Fig. 2** eine zusätzliche Abfrage-Leitung nur für analoge Schaltbereiche **17.3** vorzusehen.

Die Verdrahtung der eingangsseitigen Durchreiche-Anschlüsse **16.1.1 - 16.1.3** mit der jeweiligen Ausgangsseite **13** ist für alle Schaltersätze **11** auf gleiche Weise realisiert. Über die Durchreiche-Leitung **16.2.1** ist der eingangsseitige Durchreiche-Anschluss **16.1.1** mit dem ausgangsseitigen Durchreiche-Anschluss **16.3.1** verbunden, der seinerseits auf der Eingangsseite **12.2** des nachfolgenden Schaltersatzes **11.2** dessen Aufruf-Anschluss **15.1.2** entspricht. Die benachbarte Durchreiche-Leitung **16.2.2** verdrahtet dementsprechend den eingangsseitigen Durchreiche-Anschluss **16.1.2** mit dem ausgangsseitigen Anschluss **16.3.2**, der im darauf folgenden Schaltersatz **11.2** an Durchreiche-Anschluss **16.1.1** und im nächstfolgenden Schaltersatz **11.3** auf dessen Abfrage-Leitung **15.2.3** führt. Der vorderste Durchreiche-Anschluss **16.1.3** wird über die Durchreiche-Leitung **16.2.3** mit dem Anschluss **16.3.3** des ersten Schaltersatzes **11.1** verschaltet, so dass er über die Durchreiche-Leitung **16.2.2** des zweiten Schaltersatzes **11.2** und über die Durchreiche-Leitung **16.2.3** des dritten Schaltersatzes **11.3** die Aufruf-Leitung im letzten Schaltersatz **11.4** erreicht.

Eine kaskadierbare Anordnung von Schaltersätzen **11** weist also Aufruf- **15.1,** Abfrage- **14.1** und Durchreiche-Anschlüsse **16.1** in einer definierten gegenseitigen Anordnung auf. Der Schaltbereich **17** eines jeden Schaltersatzes **11** kann einen digitalen, binär codierten oder analogen Schalter aufweisen. Eine Reduktion der Komplexität der Kaskadenschaltung wird über eine parallelbusartige Verdrahtung von mindestens einem eingangsseitigen Durchreiche-Anschluss **16.1** zu einem ausgangsseitigen Durchreiche-Anschluss **16.3** erreicht, der in einem nachfolgenden Schaltersatz **11** an der geometrischen Position dessen Aufruf-Anschlusses **15.1** liegt. Deshalb können dem ersten Schaltersatz **11** so viele Schaltersätze **11** nachgeschaltet (kaskadiert) werden, wie Durchreiche-Leitungen **16.2** auf den Schaltersätzen **11** vorhanden sind.

## Patentansprüche

1. Kaskadierbare Anordnung von Schaltersätzen **(11)** mit einer Anzahl von Aufruf- **(15.1)** und Abfrage-Anschlüssen **(14.1)**,
**dadurch gekennzeichnet,**
**dass** auf der Eingangsseite **(12)** eines Schaltersatzes **(11)** wenigstens ein Abfrage- **(14.1)** neben einem Aufruf-Anschluss **(15.1)** vorgesehen ist, wobei der Aufruf-Anschluss **(15.1)** an den Eingang **(8)** eines Schaltbereiches **(17)** sowie an einen geometrisch zugeordneten Ausgangs-Anschluss **(14.3)** geführt ist und der Aufruf-Anschluss **(15.1)** geometrisch gesehen immer an derselben Position neben seinem Abfrage-Anschluss **(14.1)** angeordnet ist, und dass wenigstens ein Durchreiche-Anschluss **(16.1)** vorgesehen ist, der sich geometrisch gesehen ausgangsseitig an derselben Position befindet wie eingangsseitig der Aufruf-Anschluss **(15.1)**.

2. Anordnung nach Anspruch 1,
**dadurch gekennzeichnet,**
**dass** ein Schaltersatz **(11)** einen digitalen Schalter aufweist.

3. Anordnung nach Anspruch 1 oder 2,
**dadurch gekennzeichnet,**
**dass** ein Schaltersatz **(11)** eine Anzahl von Schaltstrecken aufweist.

4. Anordnung nach Anspruch 3,
**dadurch gekennzeichnet,**
**dass** die Schaltstrecken eines Schaltersatzes **(11)** binär gewichtet sind.

5. Anordnung nach Anspruch 1,
**dadurch gekennzeichnet,**
**dass** ein Schaltersatz **(11)** einen analogen Schalter aufweist.

6. Anordnung nach Anspruch 5,
**dadurch gekennzeichnet,**
**dass** der analoge Schalter ein Potentiometer ist.

7. Anordnung nach einem der vorangehenden Ansprüche,
**dadurch gekennzeichnet,**
**dass** auch unterschiedlich ausgestattete Schaltbereiche **(17)** auf dieselben Abfrage-Anschlüsse **(14.1)** führen.

8. Anordnung nach einem Anspruch 1 - 6,
**dadurch gekennzeichnet,**
**dass** für unterschiedlich ausgestattete Schaltbereiche **(17)** getrennte Abfrage-Leitungen **(14.2)** für die individuellen Abfrage-Anschlüsse **(14.1)** vorgesehen sind.
